# EUROPÄISCHE PATENTSCHRIFT

(11) **EP 1 420 064 B1**
(45) Veröffentlichungstag und Bekanntmachung des Hinweises auf die Patenterteilung: **12.10.2005**
(21) Anmeldenummer: 03024641.7
(22) Anmeldetag: 27.10.2003
(51) Int. Cl.: C12C 7/20

(54) **Verfahren zur Kochung von Würze**
Method for boiling beer wort
Procédé d'ébullition de moût de bière

(30) Priorität: 12.11.2002 DE 10252893
(43) Veröffentlichungstag der Anmeldung: 19.05.2004
(73) Patentinhaber: Hrch. Huppmann GmbH, 97318 Kitzingen (DE)
(72) Erfinder: Lenz, August, 97318 Kitzingen (DE); Kantelberg, Bernd, 97332 Volkach (DE); Hackensellner, Thomas, Dr., 84036 Landshut (DE)
(74) Vertreter: Böck, Bernhard

(56) Entgegenhaltungen:
- EP-A- 1 253 194
- EP-A- 1 264 876
- DD-A- 260 285
- DE-A- 3 614 431

## Beschreibung

Die Erfindung betrifft ein Verfahren zur Kochung von Würze nach dem Oberbegriff des Anspruchs 1

Gattungsgemäße Kochverfahren werden beispielsweise in Würzepfannen mit Innenkocher oder Außenkocher durchgeführt. Die periodische Druckentlastung während der Druckkochphasen dient dabei dazu, in der Würze enthaltene Flüssigkeit durch Phasenübergang zu verdampfen, um so den Flüssigkeitsanteil in der Würze bis zu einem gewünschten Konzentrationsgehalt zu reduzieren.

Aus der DD 260 285 A ist ein Würzekochverfahren bekannt, wobei die Würze in einer Würzekochvorrichtung in einer Druckkochphase unter periodisch wechselndem Überdruck gekocht wird, um einen Teil des Würzevolumens zu verdampfen.

Untersuchungen an der Würze haben gezeigt, dass nicht alle Umsetzungsprozesse der einzelnen Bestandteile in der Würze unter den gleichen Bedingungen optimal ablaufen. Die unterschiedlichen Verfahrensparameter, insbesondere Druck, Temperatur und Prozessdauer, beeinflussen die unterschiedlichen Umsetzungsprozesse in der Würze während der Würzekochung unterschiedlich, wobei die Prozesse bei unterschiedlichen Prozessparametern ihr jeweiliges Optimum aufweisen.

Aufgabe der vorliegenden Erfindung ist es deshalb, ein neues Verfahren zur Kochung von Würze vorzuschlagen, mit dem die Umsetzungsprozesse während der Würzekochung differenziert optimiert werden können.

Diese Aufgabe wird durch ein Verfahren nach der Lehre des Anspruchs 1 gelöst.

Vorteilhafte Ausführungsformen der Erfindung sind Gegenstand der Unteransprüche.

Ein Vorteil des neu vorgeschlagenen Verfahrens ist es, dass durch die Kombination von sogenannten Heißhaltephasen zu den bekannten Druckkochphasen, während denen die Würze unter periodisch wechselndem Überdruck gekocht wird, die Prozessparameter differenziert auf die einzelnen Umsetzungsprozesse optimiert werden können. Während der Heißhaltephasen weist die Würze eine Temperatur von oberhalb 90° C auf und steht nicht unter Überdruck, sondern wird unter Normaldruck gehalten. Die Würzetemperatur wird während der Heißhaltephase im Wesentlichen konstant auf einer bestimmten Temperatur gehalten. Der Druck während der Heißhaltephase entspricht im Wesentlichen dem atmosphärischen Normaldruck. Allerdings kann auch während der Heißhaltephase aufgrund gerätetechnischer Randbedingungen ein geringer Überdruck von einigen Millibar über Normaldruck bestehen.

Damit die Umsetzungsprozesse in der Würze während der Heißhaltephasen effektiv ablaufen können, ist die Durchmischung der Würze in der Würzekochvorrichtung von großer Bedeutung. Das heißt, die Würze darf nicht in der Würzekochvorrichtung bewegungslos stehen, sondern es muss in der Würze zumindest geringfügige Mischströmungen geben, um dadurch einen Temperaturausgleich und einen Konzentrationsausgleich zwischen den verschiedenen Bereichen in der Würzekochvorrichtung ermöglichen zu können.

Wann die Heißhaltephase durchgeführt wird, ist grundsätzlich beliebig. Besonders vorteilhaft ist es jedoch, wenn die Heißhaltephase vor der ersten Druckkochphase durchgeführt wird, da dadurch das Entgasen der Würze beziehungsweise Entlüften der Würzekochvorrichtung vor der ersten Druckkochphase unterstützt wird.

Mit welchen Mitteln die Mischung der Würze während der Heißhaltephasen bewirkt wird, ist grundsätzlich beliebig. Nach einer ersten Ausführungsform ist zum Mischen der Würze in der Heißhaltephase eine Mischeinrichtung, beispielsweise ein Rührwerk oder eine Umwälzpumpe, vorgesehen. Mit der Mischeinrichtung kann eine definierte Umwälzbewegung realisiert werden.

Nach einer zweiten alternativen Ausführungsform wird zur Durchmischung der Würze in den Heißhaltephasen periodisch geringfügig Wärme zugeführt. Dies kann beispielsweise durch kurzzeitigen Betrieb eines Röhreninnenkochers oder Röhrenaußenkochers geschehen. Aufgrund der Wärmezufuhr bildet sich eine entsprechende thermische Strömung in der Würze aus, durch die die Würze aus den verschiedenen Bereichen der Würzekocheinrichtung durchmischt wird.

Um eine möglichst gleichmäßige Durchmischung der Würze durch Wärmezufuhr erreichen zu können, ist es besonders vorteilhaft, wenn der Würze während der Heißhaltephase periodisch Wärme zugeführt wird und die Würze so drei bis fünfzehn relative Temperaturstufen durchläuft. Da insbesondere die mit dem beizugebenden Hopfen in Zusammenhang stehenden Umsetzungsprozesse stark zeitabhängig sind, ist es besonders vorteilhaft, wenn der Hopfen beziehungsweise das Hopfenextrakt der Würze bereits vor der Heißhaltephase zugeführt wird. Dadurch wird eine besonders effektive Umsetzung der Hopfeninhaltsstoffe gewährleistet.

Grundsätzlich ist es natürlich denkbar, dass Heißhaltephase und Druckkochphase in einem Gefäß, beispielsweise einer druckfesten Würzepfanne, nacheinander durchgeführt werden. Zur Beschleunigung der Prozessdurchlaufzeiten ist es jedoch auch denkbar, dass Heißhaltephasen und Druckkochphasen in unterschiedlichen Gefäßen durchgeführt werden. Da die Würze in den Heißhaltephasen nicht unter Überdruck steht, kann dadurch zudem der gerätetechnische Aufwand reduziert werden.

Das erfindungsgemäße Verfahren wird nachfolgend anhand eines möglichen Prozessablaufes beispielhaft erläutert.

Es zeigt:

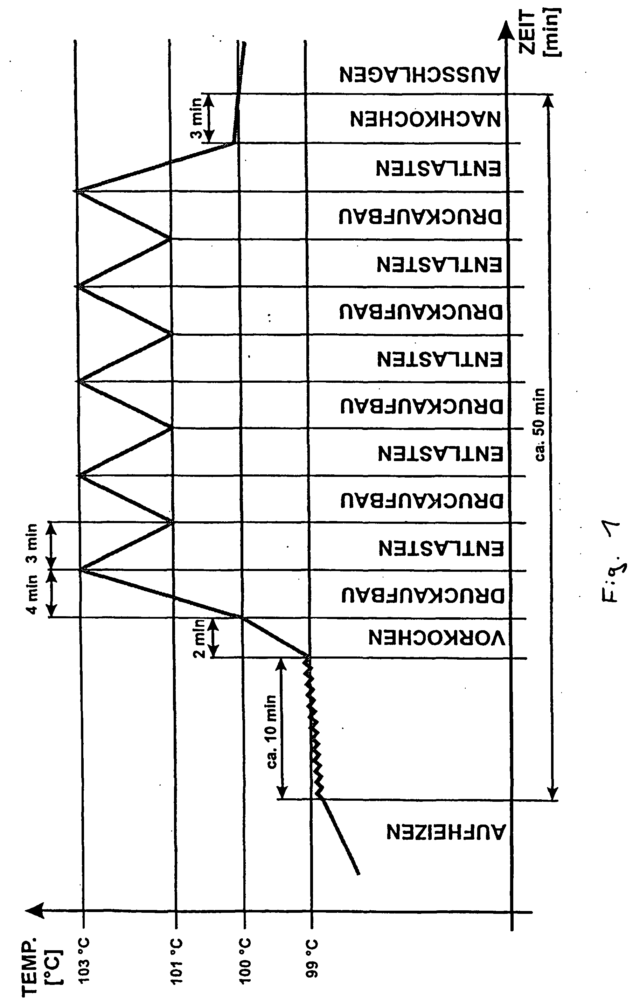

- **Fig. 1**: den Prozessablauf eines Verfahrens zur Kochung von Würze mit einer Heißhaltephase und einer anschließend durchgeführten Druckkochphase.

Zur Durchführung des in **Fig. 1** dargestellten Würzekochverfahrens wird die Würze zunächst in eine geeignete Würzekocheinrichtung, beispielsweise eine druckfeste Würzepfanne, eingefüllt. Durch Wärmezufuhr mittels einer geeigneten Vorrichtung, beispielsweise einem Röhreninnenkocher oder Röhrenaußenkocher, wird die Würze dann zunächst bis auf eine Temperatur von knapp unterhalb 99° C aufgeheizt.

Sobald die Würze eine Temperatur von knapp unterhalb 99° C aufweist, beginnt die Heißhaltephase, in der die Würze für circa zehn Minuten in einem Temperaturband von knapp unterhalb 99° C bis knapp oberhalb 99° C gehalten wird. In dieser zehnminütigen Heißhaltephase wird der an der Würzepfanne vorgesehene Röhreninnenkocher periodisch mit Heißdampf beschickt, so dass die Würze während des Temperaturanstiegs von knapp unterhalb 99° C auf knapp oberhalb 99° C mehrere relative Temperaturspitzen durchläuft. Während der zehnminütigen Heißhaltephase ist in der Würzepfanne noch kein Überdruck aufgebaut, so dass die Würze entgast und außerdem durch Verdunstung an der Oberfläche der Würze die in der Würzepfanne noch enthaltene Luft nach außen verdrängt wird.

Nach Abschluss der Heißhaltephase wird eine zweiminütige Vorkochphase durchlaufen, in der die Würze auf Siedetemperatur erhitzt wird.

Sobald die Siedetemperatur erreicht ist, wird in der Würzepfanne ein Überdruck aufgebaut, so dass unter Überdruck eine Kochtemperatur von 103° C eingestellt werden kann. Sobald die Temperaturspitze bei 103° C erreicht ist, wird die Würze in der Würzepfanne durch Druckentlastung entspannt, so dass durch entsprechenden Phasenübergang flüssige Anteile der Würze verdampfen. Während der Druckkochphase werden dann nacheinander durch Druckaufbau und Entlastung fünf Druckzyklen durchlaufen, um die erforderliche Flüssigkeitsmenge aus der Würze zu verdampfen.

Nach dem letzten Druckkochzyklus wird die Würze dann für circa drei Minuten bei 100° C nachgekocht und anschließend durch eine Ausschlagleitung aus der Würzepfanne ausgeschlagen.

## Patentansprüche

1. Verfahren zur Kochung von Würze in einer Würzekochvorrichtung, wobei die Würze in zumindest einer Druckkochphase unter periodisch wechselndem Überdruck gekocht wird,
**dadurch gekennzeichnet,**
**dass** vor einer Druckkochphase und/oder nach einer Druckkochphase und/oder zwischen zwei Druckkochphasen zumindest eine Heißhaltephase durchgeführt wird, während der die Würze bei einer Temperatur von oberhalb 90°C unter atmosphärischem Normaldruck steht und zumindest geringfügig in der Würzekochvorrichtung durchmischt wird,
wobei die Heißhaltephase 5 bis 30 Minuten, insbesondere ca. 10 Minuten, dauert,
und wobei die Würze in der Heißhaltephase im Wesentlichen konstant auf einer bestimmten Temperatur gehalten wird.

2. Verfahren nach Anspruch 1,
**dadurch gekennzeichnet,**
**dass** die Heißhaltephase vor der ersten Druckkochphase durchgeführt wird.

3. Verfahren nach Anspruch 1 oder 2,
**dadurch gekennzeichnet,**
**dass** die Würze in der Heißhaltephase eine Temperatur von ca. 1°C bis ca. 2°C unterhalb der Siedetemperatur bei Normaldruck erreicht bzw. aufweist.

4. Verfahren nach einem der Ansprüche 1 bis 3,
**dadurch gekennzeichnet,**
**dass** die Würze in der Heißhaltephase mittels einer Mischeinrichtung durchmischt wird.

5. Verfahren nach Anspruch 4,
**dadurch gekennzeichnet,**
**dass** die Mischeinrichtung in der Art eines Rührwerks oder einer Umwälzpumpe ausgebildet ist.

6. Verfahren nach einem der Ansprüche 1 bis 5,
**dadurch gekennzeichnet,**
**dass** der Würze in der Heißhaltephase periodisch geringfügig Wärme zugeführt wird, um die Würze durch die thermische Strömung zu durchmischen.

7. Verfahren nach Anspruch 6,
**dadurch gekennzeichnet,**
**dass** der Würze durch kurzzeitigen Betrieb eines Röhreninnenkochers oder Röhrenaußenkochers Wärme zugeführt wird.

8. Verfahren nach einem der Ansprüche 1 bis 7,
**dadurch gekennzeichnet,**
**dass** der Würze während der Heißhaltephase periodisch Wärme zugeführt wird und die Würze drei bis fünfzehn relative Temperaturspitzen durchläuft.

9. Verfahren nach einem der Ansprüche 1 bis 8,
**dadurch gekennzeichnet,**
**dass** der Würze vor der Heißhaltephase Hopfen oder Hopfenextrakt zugeführt wird.

10. Verfahren nach einem der Ansprüche 1 bis 9,
**dadurch gekennzeichnet,**
**dass** die Würze in der Druckkochphase unter Niederdruck bei einer Temperatur zwischen ca. 101°C und 104°C gekocht wird.

11. Verfahren nach einem der Ansprüche 1 bis 10,
**dadurch gekennzeichnet,**
**dass** die Druckkochphase ca. 25 bis ca. 50 Minuten dauert.

12. Verfahren nach einem der Ansprüche 1 bis 11,
**dadurch gekennzeichnet,**
**dass** die Heißhaltephase und die Druckkochphase in unterschiedlichen Gefäßen durchgeführt werden.

13. Verfahren nach einem der Ansprüche 1 bis 12,
**dadurch gekennzeichnet,**
**dass** während des Würzekochens ca. 2% bis ca. 6% der Würze, insbesondere weniger als ca. 4% der Würze, verdampft wird.

## Claims

1. A method for boiling wort in a wort boiler, the wort being boiled in at least one pressure boiling phase under a periodically varying overpressure,
**characterised in that**,
before a pressure boiling phase and/or after a pressure boiling phase and/or between two pressure boiling phases, at least one thermostat phase is performed, during which the wort is at a temperature of above 90°C under normal atmospheric pressure and is at least slightly mixed in the wort boiler,
wherein the thermostat phase lasts for 5 to 30 minutes, in particular approx. 10 minutes
and wherein, in the thermostat phase, the wort is kept substantially constantly at a specific temperature.

2. A method according to claim 1,
**characterised in that**
the thermostat phase is performed before the first pressure boiling phase.

3. A method according to claim 1 or claim 2,
**characterised in that**,
in the thermostat phase, the wort reaches or exhibits a temperature of approx. 1°C to approx. 2°C below boiling point at standard pressure.

4. A method according to any one of claims 1 to 3,
**characterised in that**,
in the thermostat phase, the wort is thoroughly mixed by means of a mixing device.

5. A method according to claim 4,
**characterised in that**
the mixing device takes the form of a stirrer or a circulating pump.

6. A method according to any one of claims 1 to 5,
**characterised in that**,
in the thermostat phase, a small amount of heat is periodically supplied to the wort in order to mix the wort by thermal flow.

7. A method according to claim 6,
**characterised in that**
heat is supplied to the wort by briefly operating an internal or external tubular boiler.

8. A method according to any one of claims 1 to 7,
**characterised in that**,
during the thermostat phase, heat is periodically supplied to the wort and the wort passes through three to fifteen relative temperature peaks.

9. A method according to any one of claims 1 to 8,
**characterised in that**,
before the thermostat phase, hops or hop extract is/are introduced into the wort.

10. A method according to any one of claims 1 to 9,
**characterised in that**,
in the pressure boiling phase, the wort is boiled at low pressure at a temperature of between approx. 101°C and 104°C.

11. A method according to any one of claims 1 to 10,
**characterised in that**
the pressure boiling phase lasts approx. 25 to approx. 50 minutes.

12. A method according to any one of claims 1 to 11,
**characterised in that**
the thermostat phase and the pressure boiling phases are performed in different vessels.

13. A method according to any one of claims 1 to 12,
**characterised in that**,
during wort boiling, approx. 2% to approx. 6% of the wort, in particular less than approx. 4% of the wort, is evaporated.

## Revendications

1. Procédé pour la cuisson du moût dans un dispositif de cuisson du moût, dans lequel le moût est cuit dans au moins une phase de cuisson sous pression avec surpression périodiquement variable, **caractérisé en ce qu'**avant une phase de cuisson sous pression et/ou après une phase de cuisson sous pression et/ou entre deux phases de cuisson sous pression, on exécute au moins une phase de maintien à chaud pendant laquelle le moût est à une température de plus de 90° C sous pression normale atmosphérique et il est mélangé au moins légèrement dans le dispositif de cuisson du moût, la phase de maintien à chaud durant 5 à 30 minutes, en particulier environ 10 minutes, et le moût étant maintenu sensiblement en permanence à une température donnée pendant la phase de maintien à chaud.

2. Procédé selon la revendication 1, **caractérisé en ce que** la phase de maintien à chaud est exécutée avant la première phase de cuisson sous pression.

3. Procédé selon la revendication 1 ou 2, **caractérisé en ce que**, dans la phase de maintien à chaud, le moût atteint ou présente une température d'environ 1 °C à environ 2 °C au-dessous de la température d'ébullition sous pression normale.

4. Procédé selon une des revendications 1 à 3, **caractérisé en ce que**, dans la phase de maintien à chaud, le moût est mélangé intimement au moyen d'un dispositif de mélange.

5. Procédé selon la revendication 4, **caractérisé en ce que** le dispositif de mélange est réalisé à la façon d'un agitateur ou d'une pompe de circulation.

6. Procédé selon une des revendications 1 à 5, **caractérisé en ce que**, dans la phase de maintien à chaud, une petite quantité de chaleur est périodiquement apportée au moût pour mélanger le moût par un effet de circulation thermique.

7. Procédé selon la revendication 6, **caractérisé en ce que** de la chaleur est apportée au moût par une brève mise en action d'un bouilleur intérieur tubulaire ou d'un bouilleur extérieur tubulaire.

8. Procédé selon une des revendications 1 à 7, **caractérisé en ce que**, pendant la phase de maintien à chaud, de la chaleur est périodiquement apportée au moût et le moût subit trois à quinze fois des pointes de température relatives.

9. Procédé selon une des revendications 1 à 8, **caractérisé en ce que** du houblon ou de l'extrait de houblon est ajouté au moût avant la phase de maintien à chaud.

10. Procédé selon une des revendications 1 à 9, **caractérisé en ce que**, dans la phase de cuisson sous pression, le moût est cuit sous basse pression à une température comprise entre environ 101 °C et 104 °C.

11. Procédé selon une des revendications 1 à 10, **caractérisé en ce que** la phase de cuisson sous pression dure environ 25 à environ 50 minutes.

12. Procédé selon une des revendications 1 à 11, **caractérisé en ce que** la phase de maintien à chaud et la phase de cuisson sous pression sont exécutées dans des récipients différents.

13. Procédé selon une des revendications 1 à 12, **caractérisé en ce que**, pendant la cuisson du moût, environ 2 % à environ 6 % du moût, en particulier moins d'environ 4 % du moût sont vaporisés.
